(19) **Europäisches Patentamt**

**European Patent Office**

**Office européen des brevets**

(11) Veröffentlichungsnummer: **0 449 065 B1**

(12) **EUROPÄISCHE PATENTSCHRIFT**

(45) Veröffentlichungstag der Patentschrift: **15.11.95**

(51) Int. Cl.[6]: **C08J 9/22**, C08J 9/20, E04F 13/00, //C08L25/04

(21) Anmeldenummer: **91104083.0**

(22) Anmeldetag: **16.03.91**

(54) **Feinteilige expandierbare Styrolpolymerisate.**

(30) Priorität: **28.03.90 DE 4009897**

(43) Veröffentlichungstag der Anmeldung:
**02.10.91 Patentblatt 91/40**

(45) Bekanntmachung des Hinweises auf die Patenterteilung:
**15.11.95 Patentblatt 95/46**

(84) Benannte Vertragsstaaten:
**AT BE DE ES FR GB IT NL**

(56) Entgegenhaltungen:
**DE-A- 2 655 808**
**FR-A- 2 282 446**
**FR-A- 2 337 168**
**US-A- 4 446 208**

**DATABASE WPI, acc.no. 80-81696c, Derwent Publi- & JP-A-55127442**

**DATABASE WPI, acc. no. 77-91145y, Derwent Publi- & JP-A-52134672**

**DATABASE WPIL, acc.no. 82-42525e, Derwent Publi- & JP-A-57063335**

(73) Patentinhaber: **BASF Aktiengesellschaft**
**Carl-Bosch-Strasse 38**
**D-67063 Ludwigshafen (DE)**

(72) Erfinder: **Rappold, Kurt, Dr.**
**Am Waldrand 22**
**W-6900 Heidelberg (DE)**
Erfinder: **Steinbrecher, Horst**
**Im Bluemel 14**
**W-6725 Roemerberg (DE)**
Erfinder: **Walter, Manfred, Dr.**
**Hans-Purrmann-Allee 18**
**W-6720 Speyer (DE)**

**Beschreibung**

Die Erfindung betrifft äußerst feinteilige expandierbare Styrolpolymerisate, daraus hergestellte Schaumstoffpartikel und deren Verwendung als Füllstoff für Leichtputz.

Bei der großtechnischen Herstellung von expandierbaren Styrolpolymerisaten (EPS) durch Suspensionspolymerisation fallen in geringer Menge auch äußerst feinteilige EPS-Partikel an, die bisher nicht in der Praxis verwendet wurden, da sie beim Aufschäumen in sehr starkem Maße miteinander verkleben. Für die Herstellung von Schaumstoff-Formteilen sind sie ungeeignet. Diese Fraktionen wurden daher bislang verworfen, verbrannt oder aber in Styrol gelöst erneut der Suspensionspolymerisation unterworfen. Eine solche Wiederverwendung führte jedoch zu einer Verschlechterung der EPS-Qualität. Es bestand seit langem das Bedürfnis, eine wirtschaftliche Verwertung für diese feinteiligen EPS-Randfraktionen aufzuzeigen.

Es ist aus DE-A 2655808 bekannt, EPS-Perlen, die auf ihrer Oberfläche Phosphorverbindungen enthalten, mit 0,005 bis 0,1 Gew.-% Kieselsäure als Antiverklebungsmittel zu beschichten. Bei äußerst feinteiligen EPS-Partikeln kann jedoch durch eine solche Beschichtung die Verklebungsneigung nicht unterdrückt werden.

Feinteilige EPS-Siebfraktionen mit einer Perlgröße von mehr als 0,3 mm bis 0,7 mm sind nach dem Aufschäumen als Füllstoff für Leichtputz verwendet worden. Bedingt durch die Größe der Schaumstoffperlen ist die Oberfläche der fertigen Putzschicht verhältnismäßig rauh. Es bestand seit langem das Bedürfnis nach einem wärme dämmenden Zuschlagstoff für Leichtputz, der die Herstellung von glatten Putzoberflächen ermöglicht.

Überraschenderweise wurde nun gefunden, daß EPS-Fraktionen mit einer Teilchengröße zwischen 0,025 und 0,3 mm, die mit mindestens 0,5 Gew.-% eines feinteiligen, wasserunlöslichen, unter den Bedingungen der Weiterverarbeitung nicht schmelzenden Feststoffs beschichtet sind, beim Aufschäumen nicht miteinander verkleben. Die daraus hergestellten Schaumstoffpartikel können als Füllstoff für Leichtputz verwendet werden, der die Herstellung von glatten Putzoberflächen ermöglicht.

Gegenstand der Erfindung sind somit expandierbare Styrolpolymerisate mit einem Teilchendurchmesser von 0,025 bis 0,3 mm, enthaltend

(a) ein Styrolpolymerisat

(b) 2 bis 10 Gew.-%, bezogen auf (a), eines $C_3$- bis $C_6$-Kohlenwasserstoffs als Treibmittel

(c) mindestens 0,5 Gew.-%, bezogen auf (a) einer Beschichtung aus einem wasserunlöslichen Feststoff mit einem Schmelzpunkt oberhalb 120°C und einem mittleren Teilchendurchmesser von 0,1 bis 15 $\mu$m, ausgewählt aus Carbonaten, Carbonsäuresalzen, Oxiden, Mischoxiden und Silikaten von Metallen der II., III. und/oder IV. Gruppe des Periodensystems, sowie gegebenenfalls

(d) übliche Zusatzstoffe in wirksamen Mengen.

Gegenstand der Erfindung ist ferner ein Verfahren zur Herstellung derartiger expandierbarer Styrolpolymerisate, dadurch gekennzeichnet, daß man bei der üblichen Herstellung von expandierbaren Styrolpolymerisaten durch Suspensionspolymerisation von Styrol in Gegenwart eines Treibmittels und Abtrennung der mindestens 0,3 mm großen Polymerisatpartikel, aus dem Abwasser durch Zentrifugieren eine weitere Fraktion von Polymerpartikeln der Teilchengröße von etwa 0,025 bis 0,3 mm isoliert, diese wäscht, trocknet und mit der Komponente (c) beschichtet.

Gegenstand der Erfindung sind weiterhin Styrolpolymerisat-Schaumstoffpartikel der Schüttdichte 15 bis 40 kg/m³ mit einem Teilchendurchmesser von 0,05 bis 1,2 mm, enthaltend mindestens 0,5 Gew.-%, bezogen auf das Polymerisat, einer Beschichtung aus einem wasserunlöslichen Feststoff mit einem Schmelzpunkt oberhalb von 120°C und einem mittleren Teilchendurchmesser von 0,1 bis 15 $\mu$m, ausgewählt aus Carbonaten, Carbonsäuresalzen, Oxiden, Mischoxiden und Silikaten von Metallen der II., III. und/oder IV. Gruppe des Periodensystems, sowie gegebenenfalls übliche Zusatzstoffe in wirksamen Menge, sowie die Verwendung dieser Styrolpolymerisat-Schaumstoffpartikel als wärmedammenden Füllstoff für Leichtputz.

Die erfindungsgemäßen expandierbaren Styrolpolymerisate sind gekennzeichnet durch einen Teilchendurchmesser von 0,025 bis 0,3 mm, vorzugsweise 0,05 bis 0,25 mm, insbesondere 0,06 bis 0,2 mm.

Styrolpolymerisate im Sinn der Erfindung sind Polystyrol und Mischpolymerisate des Styrols mit anderen $\alpha,\beta$-olefinisch ungesättigten Verbindungen, die mindestens 50 Gew.-Teile Styrol einpolymerisiert erhalten. Als Comonomere kommen z.B. in Frage $\alpha$-Methylstyrol, kernhalogenierte Styrole, kernalkylierte Styrole, Acrylnitril, Ester der Acryl- oder Methacrylsäure von Alkoholen mit 1 bis 8 C-Atomen, N-Vinylverbindungen, wie Vinylcarbazol, Maleinsäureanhydrid oder auch geringe Mengen an Verbindungen, die zwei polymerisierbare Doppelbindungen enthalten, wie Butadien, Divinylbenzol oder Butandioldiacrylat.

Als Treibmittel enthalten die Partikel 1 bis 10 Gew.-% , vorzugsweise 3 bis 8 Gew.-% eines $C_3$- bis $C_6$-Kohlenwasserstoffs, wie Propan, Butan, Isobutan, n-Pentan, i-Pentan, Neopentan und/oder Hexan. Vorzugsweise wird ein handelsübliches Pentan-Gemisch verwendet.

Die Styrolpolymerisate können auch übliche Zusätze an anderen Stoffen enthalten, die den expandierbaren Produkten bestimmte Eigenschaften verleihen. Genannt seien beispielsweise Flammschutzmittel auf Basis von organischen Brom- oder Chlorverbindungen, die auch in Form von Mikrokapseln mit einer styrolunlöslichen Beschichtung vorliegen können, wie Trisdibrompropylphosphat, Hexabromcyclododecan, Chlorparaffin, sowie Synergisten für Flammschutzmittel, wie Dicumyl und hochzersetzliche organische Peroxide; ferner Antistatike, Stabilisatoren, Farbstoffe, Schmiermittel und Füllstoffe.

Erfindungswesentlich ist es, daß die Partikel mit einer Beschichtung aus einem wasserunlöslichen feinteiligen Feststoff beschichtet sind, der die Aufgabe hat, ein Verkleben der Partikel beim Aufschäumen zu verhindern. Der Feststoff soll unter den Bedingungen der Weiterverarbeitung nicht erweichen oder schmelzen, d.h. einen Schmelzpunkt oberhalb von 120°C, vorzugsweise oberhalb von 150°C aufweisen. Er soll ferner äußerst feinteilig sein, d.h. eine mittlere Teilchengröße eine zwischen 0,1 und 15 $\mu$m, vorzugsweise zwischen 0,5 und 10 $\mu$m aufweisen.

Die Beschichtung soll mindestens 0,5 Gew.-%, vorzugsweise mindestens 0,8 Gew.-%, insbesondere 1 bis 2 Gew.-%, bezogen auf das Styrolpolymerisat, betragen. Hydrophobe oder hydrophobierte Feststoffe sind besonders gut geeignet.

Geeignete Feststoffe sind wasserunlösliche Carbonate, Carbonsäuresalze, Oxide und Mischoxide von Metallen der II., III. und/oder IV. Gruppe des Periodensystems, wie Calciumcarbonat, Magnesiumcarbonat, Bariumcarbonat, Zinkcarbonat, Magnesiumstearat, Calciumpalmitat, Zinkstearat, Aluminiumstearat, Zinkoxid, Aluminiumoxid, Titandioxid, Siliciumdioxid, Magnesium-, Calcium- und Aluminiumsilikate.

Als Hydrophobierungsmittel werden vorzugsweise Silikone verwendet.

Als feinteiliges expandierbares Styrolpolymerisat wird vorteilhaft das feinteilige Abfallprodukt der EPS-Produktion verwendet, wie es bei der üblichen Polymerisation von Styrol in wäßriger Suspension in Gegenwart eines Treibmittels und in Gegenwart eines Suspendierhilfsmittels in einer Menge von etwa 1 bis 5 Gew.-% entsteht. Nach dem Abtrennen der Hauptmenge des EPS mit einer Siebschleuder der Maschenweite von etwa 0,2 bis 0,3 mm, vorzugsweise 0,25 mm, wird aus dem Abwasser durch Zentrifugieren, beispielsweise mittels eines Dekanters eine weitere Fraktion von EPS-Partikeln der Teilchengröße von etwa 0,025 bis 0,3 mm isoliert, gewaschen und anschließend getrocknet. Das Aufbringen der Beschichtung kann in einem üblichen Trommelmischer erfolgen.

Durch Erhitzen mit Heißluft oder insbesondere mit Wasserdampf können die erfindungsgemäßen EPS-Partikel zu Schaumstoffpartikeln aufgeschäumt werden, die eine Dichte von 10 bis 65 kg/m$^3$ (Schüttdichte ca. 15 bis 40 kg/m$^3$) aufweisen. Der Teilchendurchmesser liegt etwa bei 0,05 bis 1,2 mm, vorzugsweise 0,1 bis 1,0 mm.

Bedingt durch die Beschichtung wird beim Schäumen eine Verklebung der Partikel wirksam verhindert.

Die erfindungsgemäßen Schaumstoffpartikel finden Verwendung als wärmedämmender Füllstoff für Leichtputz.

Der Leichtputz enthält etwa 20 bis 80 Vol.-%, vorzugsweise 30 bis 50 Vol.-% Schaumstoffpartikel.

Der Leichtputz basiert ansonsten auf üblicher mineralischer Basis, wie Gips, Kalk oder Zement und üblichen mineralischen Zuschlagstoffen.

Beispiel 1

Isolierung von EPS der Teilchengröße 0,03 bis 0,25 mm

Aus dem Abwasser der EPS-Produktion, wie es nach dem Abtrennen der EPS-Hauptmenge (Treibmittelgehalt 7 Gew.-% Pentan) mittels einer Siebschleuder der Maschenweite 0,25 mm und waschen des Produkts anfällt, werden mittels eines Dekanters EPS-Partikel der Teilchengröße 0,03 bis 0,25 mm abgetrennt. Das feinteilige Produkt wird mit der 10-fachen Wassermenge gewaschen, das anhaftende Wasser in einem Trockendekanter abgeschleudert und anschließend in einem Heißluftstromtrockner getrocknet. Der Pentangehalt des Produkt beträgt 6 Gew.-%.

Beispiel 2

EPS-Beschichtung und Herstellung der Schaumstoffpartikel

Die in Beispiel 1 erhaltenen EPS-Partikel werden in einem Trommelmischer mit der in der Tabelle angegebenen Menge eines Feststoffs beschichtet und anschließend in einem Druckvorschäumer mit geschlossener Bodenplatte mit seitlicher Dampfzuführung ca. 90 Sekunden bei 115°C aufgeschäumt. Zusammenhaftende Schaumstoffteilchen werden anschließend durch ein Sieb abgetrennt (Verklebungsgrad). Die erhaltenen Ergebnisse sind in der Tabelle zusammengefaßt.

Beispiel 3

Putzzusammensetzungen und Eigenschaften

3.1 500 Volumenteile Schaumstoffpartikel der Beispiele 2.2, 2.3, 2.5 bis 2.9 werden mit 1000 Volumenteilen Industriegips gemischt. Nach dem Anteigen mit Wasser wird die Masse zur Herstellung von wärmedämmenden Innenputzbeschichtungen verwendet, die sich durch eine besonders glatte Oberfläche auszeichnen.

3.2 350 Volumenteile Schaumstoffpartikel der Beispiele 2.2, 2.3, 2.5 bis 2.9 werden mit 1000 Volumenteilen eines handelsüblichen mineralischen Außenputzes gemischt. Nach dem Anteigen mit wasser wird die Masse zur Herstellung von wärmedämmenden Außenputzbeschichtungen verwendet, die sich durch eine besonders glatte Oberfläche auszeichnen.

Tabelle

| Beispiel | Beschichtungsmittel | Menge [Gew.-%] | mittl. Teilchengröße [$\mu$m] | Schüttdichte [g/l] | Verklebungsgrad % |
|---|---|---|---|---|---|
| 2.1 (Vergleich) | hydrophobiertes $SiO_2$ (Sipernat D17 der Fa. Degussa) | 0,4 | 10 | 18,0 | 16 |
| 2.2 | hydrophobiertes $SiO_2$ | 0,8 | 10 | 19,3 | 3,2 |
| 2.3 | hydrophobiertes $SiO_2$ | 1,0 | 10 | 19,8 | 0,8 |
| 2.4 (Vergleich) | nicht hydrophobiertes $SiO_2$ (Aerosil 200 der Fa. Degussa) | 0,4 | 12 | 18,5 | 25 |
| 2.5 | nicht hydrophobiertes $SiO_2$ | 1,0 | 12 | 19,1 | 6 |
| 2.6 | Mg-Stearat | 2 | 14 | 22 | 8 |
| 2.7 | $TiO_2$ | 2 | 14 | 21 | 9 |
| 2.8 | Calciumcarbonat | 1,5 | 15 | 20 | 7 |
| 2.9 | $Al_2O_3$ | 1,8 | 15 | 22 | 8 |

**Patentansprüche**

1.  Expandierbare Styrolpolymerisate mit einem Teilchendurchmesser von 0,025 bis 0,3 mm, enthaltend
    (a) ein Styrolpolymerisat

5

(b) 2 bis 10 Gew.-%, bezogen auf (a), eines C$_3$- bis C$_6$-Kohlenwasserstoffs als Treibmittel
(c) mindestens 0,5 Gew.-%, bezogen auf (a) einer Beschichtung aus einem wasserunlöslichen Feststoff mit einem Schmelzpunkt oberhalb 120°C und einem mittleren Teilchendurchmesser von 0,1 bis 15 μm ausgewählt aus Carbonaten, Carbonsäuresalzen, Oxiden, Mischoxiden und Silikaten von Metallen der II., III. und/oder IV. Gruppe des Periodensystems, sowie gegebenenfalls
(d) übliche Zusatzstoffe in wirksamen Mengen.

2.  Verfahren gemäß Anspruch 1, dadurch gekennzeichnet, daß die Komponente c) aus Calciumcarbonat, Magnesiumcarbonat, Bariumcarbonat, Zinkcarbonat, Magnesiumstearat, Calciumpalmitat, Zinkstearat, Aluminiumstearat, Zinkoxid, Aluminiumoxid, Titandioxid, Siliciumdioxid, Magnesium-, Calcium- und Aluminiumsilikate ausgewählt ist.

3.  Expandierbare Styrolpolymerisate gemäß Anspruch 1 bis 2, dadurch gekennzeichnet, daß die Komponente (c) hydrophob oder hydrophobiert ist.

4.  Verfahren zur Herstellung expandierbarer Styrolpolymerisate gemäß Anspruch 1, dadurch gekennzeichnet, daß man bei der üblichen Herstellung von expandierbaren Styrolpolymerisaten durch Suspensionspolymerisation von Styrol in Gegenwart eines Treibmittels und Abtrennung der mindestens 0,3 mm großen Polymerisatpartikel, aus dem Abwasser durch Zentrifugieren eine weitere Fraktion von Polymerpartikeln der Teilchengröße von etwa 0,025 bis 0,3 mm isoliert, diese wäscht, trocknet und mit der Komponente (c) beschichtet.

5.  Styrolpolymerisat-Schaumstoffpartikel der Schüttdichte 15 bis 40 kg/m$^3$ mit einem Teilchendurchmesser von 0,05 bis 1,2 mm, enthaltend mindestens 0,5 Gew.-%, bezogen auf das Polymerisat, einer Beschichtung aus einem wasserunlöslichen Feststoff mit einem Schmelzpunkt oberhalb von 120°C und einem mittleren Teilchendurchmesser von 0,1 bis 15 μm, ausgewählt aus der Gruppe, enthaltend Carbonate, Carbonsäuresalze, Oxide, Mischoxide und Silikate von Metallen der II., III. und/oder IV. Gruppe des Periodensystems, sowie gegebenenfalls übliche Zusatzstoffe in wirksamen Mengen.

6.  Verwendung der Styrolpolymerisat-Schaumstoffpartikel gemäß Anspruch 5 als wärmedämmenden Füllstoff für Leichtputz.

7.  Leichtputz auf Basis von mineralischen Bindemitteln, enthaltend 20 bis 80 Vol.-% Styrolpolymerisat-Schaumstoffpartikel gemäß Anspruch 5.

**Claims**

1.  An expandable styrene polymer having a particle diameter of from 0.025 to 0.3 mm and containing
    (a) a styrene polymer,
    (b) from 2 to 10% by weight, based on (a), of a C$_3$- to C$_6$-hydrocarbon as blowing agent,
    (c) 0.5% by weight or more, based on (a), of a coating comprising a water-insoluble solid having a melting point above 120°C and having a mean particle diameter of from 0.1 to 15 μm, selected from carbonates, carboxylic acid salts, oxides, mixed oxides and silicates of metals from group II, III and/or IV of the periodic table, and, if desired,
    (d) conventional additives in effective amounts.

2.  An expandable styrene polymer as claimed in claim 1, wherein component c) is selected from calcium carbonate, magnesium carbonate, barium carbonate, zinc carbonate, magnesium stearate, calcium palmitate, zinc stearate, aluminum stearate, zinc oxide, aluminum oxide, titanium dioxide, silicon dioxide, magnesium silicate, calcium silicate and aluminum silicate.

3.  An expandable styrene polymer as claimed in claim 1 or 2, wherein component (c) is hydrophobic or has been rendered hydrophobic.

4.  A process for the preparation of an expandable styrene polymer as claimed in claim 1, which comprises isolating a further fraction of polymer particles having a particle size of from about 0.025 to 0.3 mm by centrifugation from the effluent from the conventional preparation of an expandable styrene polymer by suspension polymerization of styrene in the presence of a blowing agent with separation of the polymer particles having a size of 0.3 mm or larger, washing and drying this fraction, and coating the particles with component (c).

5. Styrene polymer foam particles having a bulk density of from 15 to 40 kg/m$^3$, having a particle diameter of from 0.05 to 1.2 mm and containing 0.5% by weight or more, based on the polymer, of a coating comprising a water-insoluble solid having a melting point above 120°C and having a mean particle diameter of from 0.1 to 15 $\mu$m, selected from the group consisting of carbonates, carboxylic acid salts, oxides, mixed oxides and silicates of metals from group II, III and/or IV of the periodic table, and, if desired, conventional additives in effective amounts.

6. The use of styrene polymer foam particles as claimed in claim 5 as a heat-insulating filler for lightweight plaster.

7. Lightweight plaster based on mineral binders and containing from 20 to 80% by volume of styrene polymer foam particles as claimed in claim 5.

**Revendications**

1. Polystyrène expansible, ayant un diamètre de particules de 0,025 à 0,3 mm, contenant
   (a) un polystyrène
   (b) 2 à 10 % en poids, par rapport à (a), d'un hydrocarbure en C$_3$-C$_6$, en tant qu'agent gonflant,
   (c) au moins 0,5 % en poids, par rapport à (a), d'un revêtement en une substance solide insoluble dans l'eau, ayant un point de fusion supérieur à 120°C et un diamètre de particules de 0,1 à 15 $\mu$m, choisi parmi les carbonates, les sels d'acides carboxyliques, les oxydes, les oxydes mixtes et les silicates des métaux du IIème, IIIème et/ou IVème groupe de la classification périodique des éléments, ainsi qu'éventuellement,
   (d) des adjuvants usuels en quantités efficaces.

2. Procédé selon la revendication 1, caractérisé en ce que le composant (c) est choisi dans le groupe comprenant le carbonate de calcium, le carbonate de magnésium, le carbonate de baryum, le carbonate de zinc, le stéarate de magnésium, le palmitate de calcium, le stéarate de zinc, le stéarate d'aluminium, l'oxyde de zinc, l'oxyde d'aluminium, le dioxyde de titane, le dioxyde de silicium, le silicate de magnésium, le silicate de calcium et le silicate d'aluminium.

3. Polystyrène expansible selon les revendications 1 à 2, caractérisé en ce que le composant (c) est hydrophobe ou peut être rendu hydrophobe.

4. Procédé de préparation de polystyrène expansible selon la revendication 1, caractérisé en ce que lors de la préparation usuelle de polystyrène expansible, par polymérisation en suspension du styrène, en présence d'un agent gonflant et en séparant les particules de polymère ayant une taille d'au moins 0,3 mm, on isole, à partir des eaux de rejet, par centrifugation, une autre fraction de particules de polymère ayant une taille de particules d'environ 0,025 à 0,3 mm, on lave celles-ci, les sèche et les enrobe avec le composant (c).

5. Particules de polystyrène expansé ayant une densité apparente de 15 à 40 kg/m$^3$, ayant un diamètre de particules de 0,05 à 1,2 mm, contenant au moins 0,5 %, par rapport au polymère, d'un revêtement formé d'une substance solide insoluble dans l'eau, ayant un point de fusion supérieur à 120°C et un diamètre de particules de 0,1 à 15 $\mu$m, choisi parmi les carbonates, les sels d'acides carboxyliques, les oxydes, les oxydes mixtes et les silicates des métaux du IIème, IIIème et/ou IVème groupe de la classification périodique des éléments, ainsi qu'éventuellement des adjuvants usuels en quantités efficaces.

6. Utilisation de particules de polystyrène expansé selon la revendication 5, en tant que charge isolant thermique pour enduit léger.

7. Enduit léger à base de liants minéraux, contenant de 20 à 80 % en volume de particules de polystyrène expansé selon la revendication 5.